# EUROPÄISCHE PATENTSCHRIFT

(11) **EP 4 150 182 B1**
(45) Veröffentlichungstag und Bekanntmachung des Hinweises auf die Patenterteilung: **11.12.2024**
(21) Anmeldenummer: 21726860.6
(22) Anmeldetag: 11.05.2021
(51) Int. Cl.: E05F 1/10, E05F 15/53, E05F 15/622, F16F 9/02, F16F 9/32, F16F 9/54

(54) **ANTRIEB ZUR VERSTELLUNG EINES VERSTELLELEMENTS EINES KRAFTFAHRZEUGS**
DRIVE UNIT FOR ADJUSTING CLOSURE ELEMENT OF MOTOR VEHICLE
ENTRAÎNEMENT POUR RÉGLER UN ÉLÉMENT DE FERMETURE D'UN VÉHICULE

(30) Priorität: 13.05.2020 DE 102020112977
(43) Veröffentlichungstag der Anmeldung: 22.03.2023
(73) Patentinhaber: Brose Fahrzeugteile SE & Co. Kommanditgesellschaft, Bamberg, 96052 Bamberg (DE)
(72) Erfinder: GUTGESELL, Andreas, 96052 Bamberg (DE); FISCHER, Matthias, 96274 Itzgrund (DE); SEIDL, Mattias, 96328 Küps (DE); PFRENGER, Peter, 98673 Eisfeld (DE); SCHNEIDERBANGER, Michael, 96179 Rattelsdorf (DE)
(74) Vertreter: Gottschald Patentanwälte Partnerschaft mbB
(86) Internationale Anmeldenummer: PCT/EP2021/062537
(87) Internationale Veröffentlichungsnummer: WO 2021/228893

(56) Entgegenhaltungen:
- DE-A1- 102014 105 956
- DE-A1- 102014 201 941
- DE-A1- 102016 214 837
- DE-A1- 102018 117 889
- US-B2- 9 360 077

## Beschreibung

Die Erfindung betrifft einen Antrieb zur Verstellung eines Verstellelements, insbesondere einer Klappe, eines Kraftfahrzeugs gemäß dem Oberbegriff von Anspruch 1 sowie ein Verfahren zur Montage eines Antriebs gemäß Anspruch 14.

Der Begriff "Verstellelement" ist vorliegend weit zu verstehen. Er umfasst beispielsweise Klappen wie Heckklappen, Heckdeckel, Motorhauben, Seitentüren, Laderaumklappen oder dergleichen oder Schiebetüren eines Kraftfahrzeugs.

Zur Verstellung eines solchen Verstellelements, beispielsweise einer Heckklappe, sind unterschiedliche Antriebsarten bekannt. So sind motorgetriebene sowie motorlose und insbesondere federgetriebene Antriebe bekannt. Ein motorgetriebener Antrieb ist beispielsweise ein Spindelantrieb, der über einen Antriebsmotor ein Spindel-Spindelmuttergetriebe als Vorschubgetriebe zur Erzeugung linearer Antriebsbewegungen antreibt. Ein motorloser Antrieb weist insbesondere eine Gasdruckfeder auf, die eine Antriebseinheit mit einem gasgefüllten Gasdruckfeder-Zylinder und einer darin axialgeführten Gasdruckfeder-Kolbenstange, also einer Schubstange mit endseitigem Kolben, aufweist. Das in den Zylinder gefüllte Gas ist dann druckbeaufschlagt und stellt dadurch die Federkraft bereit. Diese Antriebseinheit kann zusätzlich noch durch eine Antriebsfederanordnung mit mindestens einer Antriebsfeder, insbesondere einer Schraubenfeder, beispielsweise einer Schraubendruckfeder, unterstützt sein, die eine zusätzliche Federkraft bereitstellt.

Der bekannte Antrieb (DE 10 2008 061 117 A1), von dem die Erfindung ausgeht, weist eine solche Antriebseinheit in Form einer Gasdruckfeder auf. Die Antriebseinheit ist von einer Antriebsfederanordnung mit einer Antriebsfeder in Form einer Schraubendruckfeder radial umgeben. Der Antrieb weist zum Ausleiten von linearen Antriebsbewegungen an das Kraftfahrzeug zwei zueinander entlang einer geometrischen Antriebsachse zwischen einer eingefahrenen Stellung und einer ausgefahrenen Stellung verstellbare Gelenkteile auf, die jeweils mit einem kraftfahrzeugseitigen Gegengelenkteil einen Antriebsanschluss zur Kopplung mit dem Verstellelement einerseits und dem Kraftfahrzeug im Übrigen andererseits bilden. Das eine Gelenkteil ist dabei mit einem Hohlzylinder der Antriebseinheit, nämlich dem Gasdruckfeder-Zylinder, und das andere Gelenkteil mit einer Stange der Antriebseinheit, nämlich der mit dem Gasdruckfeder-Kolben versehenen Stange, axialfest gekoppelt. Zwischen dem jeweiligen Gelenkteil und der Antriebseinheit ist jeweils eine Metallplatte vorgesehen, an der sich die Antriebsfeder der Antriebsfederanordnung axial abstützt, um die Federkraft an die Gelenkteile zu übertragen.

Das Antriebsgehäuse, das aus einem Kunststoffmaterial ausgelegt ist, ist an den beiden axialen Enden nach innen abgewinkelt und bildet damit einen Boden, der die jeweilige Metallplatte zum Gelenkteil hin gegen die Federkraft der Antriebsfederanordnung sichert. Eine weitere axiale Sicherung bilden im am Kraftfahrzeug montierten Zustand die beiden Gelenkteile selbst, die jeweils mit der zugeordneten Komponente der Gasdruckfeder, also dem Gasdruckfeder-Zylinder einerseits und der Gasdruckfeder-Kolbenstange andererseits, gekoppelt sind. Problematisch ist allerdings, dass bei einer Zerstörung des Gehäuses und der Gelenkteile, beispielsweise im Brandfall, das Risiko einer ungewollten Expansion der Antriebsfeder der Antriebsfederanordnung besteht, da die beiden Metallplatten dann gegebenenfalls keinen oder jedenfalls keinen ausreichenden axialen Halt mehr haben.

Es ist auch bekannt, zur axialen Abstützung einer Antriebsfeder einer Antriebsfederanordnung Metallkörper vorzusehen, die mit den die Antriebskraft übertragenden Komponenten der Antriebseinheit, also dem Hohlzylinder und der darin axialgeführten Stange, jeweils vercrimpt sind, um die Metallkörper an der Antriebseinheit axial zu sichern und dadurch eine ungewollte Expansion der Antriebsfeder zu verhindern. Diese Metallkörper werden dann üblicherweise zur Bildung des zugeordneten Gelenkteils mit Kunststoffmaterial umspritzt. Ein entsprechender Antrieb ist relativ komplex aufgebaut und weist eine hohe Anzahl an Teilen auf.

Weitere bekannte Antriebe sind jeweils aus der DE 10 2018 117 889 A1, der US 9,360,077 B2, der DE 10 2016 214 837 A1 sowie der DE 10 2014 201 941 A1 bekannt.

Der Erfindung liegt das Problem zu Grunde, den bekannten Antrieb derart auszugestalten und weiterzubilden, dass eine hohe Betriebssicherheit bei gleichzeitig einfachem Aufbau gewährleistet wird.

Das obige Problem wird bei einem Antrieb zur Verstellung eines Verstellelements, insbesondere einer Klappe, eines Kraftfahrzeugs gemäß dem Oberbegriff von Anspruch 1 durch die Merkmale des kennzeichnenden Teils von Anspruch 1 gelöst.

Wesentlich ist die grundsätzliche Überlegung, die Federanordnung über ein Sicherungselement an der zugeordneten eine Antriebskraft übertragenden Komponente der Antriebseinheit axial zu sichern. Das Sicherungselement ragt radial in die gedachte Verlängerung des Federmaterials, also des die Federwindungen bildenden Federdrahtes, der Antriebsfederanordnung, insbesondere der axial nächstliegenden Antriebsfeder. Der Begriff "axial" ist dabei auf die Verlaufsrichtung der Federmittellinie bzw. geometrischen Antriebsachse bezogen. Die gedachte Verlängerung, im weiteren "Projektion", des Federmaterials verläuft hier und vorzugsweise ringförmig um die geometrische Antriebsachse. Zum einen wird auf diese Weise eine besonders einfache Montage gewährleistet, da das jeweilige Sicherungselement lediglich aufgeschraubt werden muss. Zum Anderen wird die üblicherweise stabil ausgestaltete Komponente der Antriebseinheit im Brandfall nicht, oder nicht so schnell, wegschmelzen. Wenn dann auch das Sicherungselement feuerfest ausgestaltet ist, kann das Gelenkteil wegschmelzen, ohne dass durch die Federanordnung eine Gefahr entsteht.

Im Einzelnen wird vorgeschlagen, dass im montierten Zustand mindestens eine der Komponenten der Antriebseinheit, insbesondere beide Komponenten der Antriebseinheit, mit einem Sicherungselement über eine Gewindeverbindung axialfest gekoppelt ist oder sind, und dass das Sicherungselement radial in eine axiale Projektion eines Federmaterials der Antriebsfederanordnung ragt.

Durch das Vorsehen einer Gewindeverbindung ergibt sich neben der Sicherungsfunktion eine einfache Montage in Kombination mit einer stabilen Verbindung, die insbesondere direkt zwischen dem Sicherungselement und der Komponente der Antriebseinheit vorgesehen ist.

Es ist vorgesehen, dass eine Komponente der Antriebseinheit über das Sicherungselement mit dem zugeordneten Gelenkteil verbunden ist. Dadurch ergibt sich eine besonders einfache Montage des Gelenkteils und des Sicherungselements an der Komponente der Antriebseinheit, insbesondere wenn beide gemeinsam angeschraubt werden können.

Anspruch 2 betrifft die bevorzugte Anordnung des Sicherungselements entlang der Antriebsachse. Diese dient einer guten Sicherung in Kombination mit einer einfachen Montage.

Anspruch 3 betrifft bevorzugte Ausgestaltungen der Form des Sicherungselements, die derart gewählt sind, dass sich vorzugsweise eine Verdrehsicherung des Sicherungselements, und somit der Komponente der Antriebseinheit, gegenüber dem Gelenkteil ergibt. Eine weitere Möglichkeit, eine Verdrehsicherung zu realisieren ergibt sich aus Anspruch 8, insbesondere in Kombination mit den Ansprüchen 5 bis 7.

Anspruch 4 betrifft einen axialen Fortsatz des Hohlzylinders, auf den das Sicherungselement aufgeschraubt sein kann. Aus den Ansprüchen 5 und 6 ergibt sich weiterhin eine Ausgestaltung, in der der axiale Fortsatz einen axialen Endabschnitt mit reduziertem Querschnitt aufweist. Dieser kann mehrere Funktionen aufweisen. Zum Einen dient er vorzugsweise bei der Montage als Einfädelhilfe, zum Anderen kann er das Drehmoment erhöhen, das zum Losdrehen der Gewindeverbindung benötigt wird, wenn er wie in Anspruch 6 vorgeschlagen in Eingriff mit einer korrespondierenden Aufnahme des zugeordneten Gelenkteils steht. Zusätzlich kann er dazu dienen, den Hohlzylinder bezüglich des Gelenkteils zu zentrieren.

Anspruch 6 betrifft die bevorzugte Art, die Gewindeverbindung zu bilden. Gemäß Anspruch 7 kann die Gewindeverbindung gegen ein Losdrehen gesichert sein. In einer besonders bevorzugten Ausführungsform geschieht dies über einen Verdrehsicherungsabschnitt, der durch den axialen Endabschnitt gebildet werden kann.

Die Ansprüche 8 und 9 betreffen ein Antriebsgehäuse und dessen bevorzugte Anordnung. Für eine Zentrierung mindestens einer der Komponenten der Antriebseinheit in axialer Richtung kann eines der Gehäuserohre einen Zentrierungsbund aufweisen. Insbesondere in Kombination mit einer Montagehilfe bildet dieser Zentrierungsbund eine weitere bevorzugte Ausgestaltung.

Anspruch 11 betrifft eine bevorzugte Möglichkeit eines Wassermanagements des Antriebs.

Die Ansprüche 12 und 13 betreffen Ausgestaltungen der Antriebsfederanordnung, des Sicherungselements und der Antriebseinheit.

Nach einer weiteren Lehre gemäß Anspruch 14, der eigenständige Bedeutung zukommt, wird ein Verfahren zur Montage eines Antriebs beansprucht. Dieses Verfahren dient insbesondere zur Montage eines vorschlagsgemäßen Antriebs. Auf alle Ausführungen zu dem vorschlagsgemäßen Antrieb darf verwiesen werden.

Wesentlich bei diesem Verfahren ist die Verbindung des inneren Gehäuserohrs mit dem zugeordneten Gelenkteil, der Antriebseinheit und der Federanordnung, für die insbesondere der Zentrierungsbund als Montagehilfe vorgesehen ist.

Anspruch 15 betrifft die Montage des Sicherungselements.

Im Folgenden wird die Erfindung anhand einer lediglich Ausführungsbeispiele darstellenden Zeichnung näher erläutert. In der Zeichnung zeigt:
Fig. 1 in einer schematischen Perspektivansicht das Heck eines Kraftfahrzeugs mit einem vorschlagsgemäßen Antrieb,
Fig. 2 in einer Schnittansicht den vorschlagsgemäßen Antrieb gemäß Fig. 1 in einer eingefahrenen Stellung
Fig. 3 in einer Schnittansicht den vorschlagsgemäßen Antrieb gemäß Fig. 1 in einer ausgefahrenen Stellung,
Fig. 4 in einer vergrößerten perspektivischen Ansicht ein Detail des vorschlagsgemäßen Antriebs gemäß Fig. 1 in einer schematischen Darstellung eines Ablaufs der Montage und
Fig. 5 in einer vergrößerten perspektivischen Ansicht ein Detail einer alternativen Ausführungsform des vorschlagsgemäßen Antriebs gemäß Fig. 1 in einer schematischen Darstellung eines Ablaufs der Montage.

Der in der Zeichnung dargestellte Antrieb 1, der hier als Linearantrieb ausgebildet ist, ist hier und vorzugsweise in noch zu erläuternder Weise als Gasdruckfederantrieb ausgestaltet. Grundsätzlich kann der Antrieb 1 aber auch als Spindelantrieb ausgestaltet sein. Die Ausführungen zu einem Gasdruckfederantrieb gelten somit gleichermaßen auch für einen Spindelantrieb.

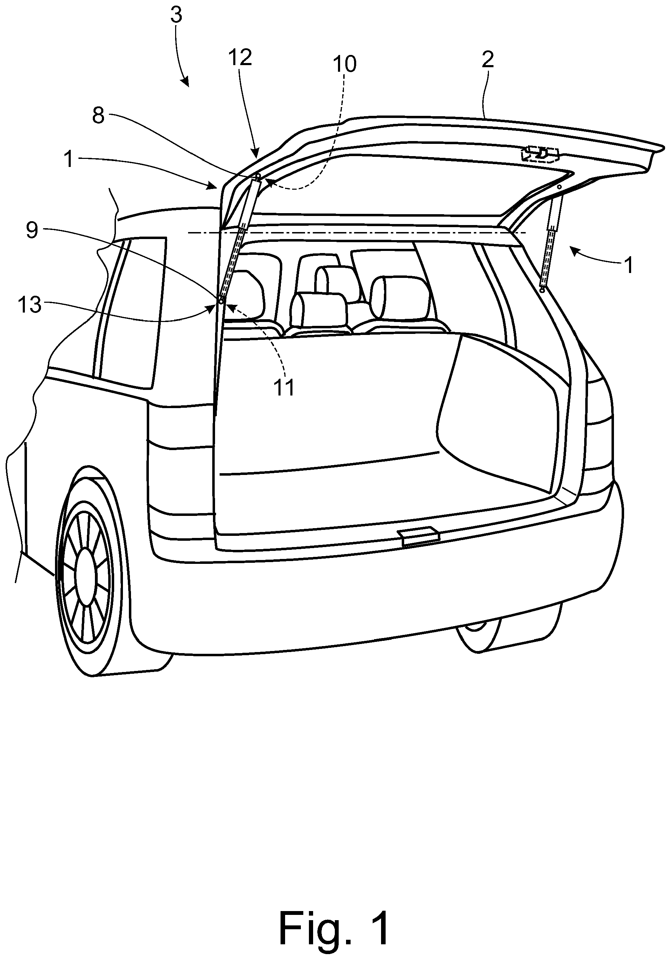

Der vorschlagsgemäße Antrieb 1, der hier als Gasdruckfederantrieb ausgestaltet ist, dient der hier motorlosen und rein federgetriebenen Verstellung eines Verstellelements 2, insbesondere einer Klappe, eines Kraftfahrzeugs 3. Bei dem Verstellelement 2 handelt es sich gemäß Fig. 1 um eine Heckklappe des Kraftfahrzeugs 3. Hinsichtlich anderer Ausgestaltungen des Verstellelements 2 sei auf die Aufzählung im einleitenden Teil der Beschreibung verwiesen. Wie dargestellt können dabei auch mehrere, insbesondere zwei, Antriebe 1 zur Verstellung des Verstellelements 2 vorgesehen sein.

Der Antrieb 1 weist eine Antriebseinheit 4 auf, die als eine Antriebskraft übertragende Komponenten einen Hohlzylinder 5 und eine darin axial geführte Stange 6 aufweist. Der Hohlzylinder 5 und die Stange 6 sind, hier unter anderem über ein in den Hohlzylinder 5 gefülltes Gas, gegeneinander vorgespannt, hier und vorzugsweise in die ausgefahrene Stellung.

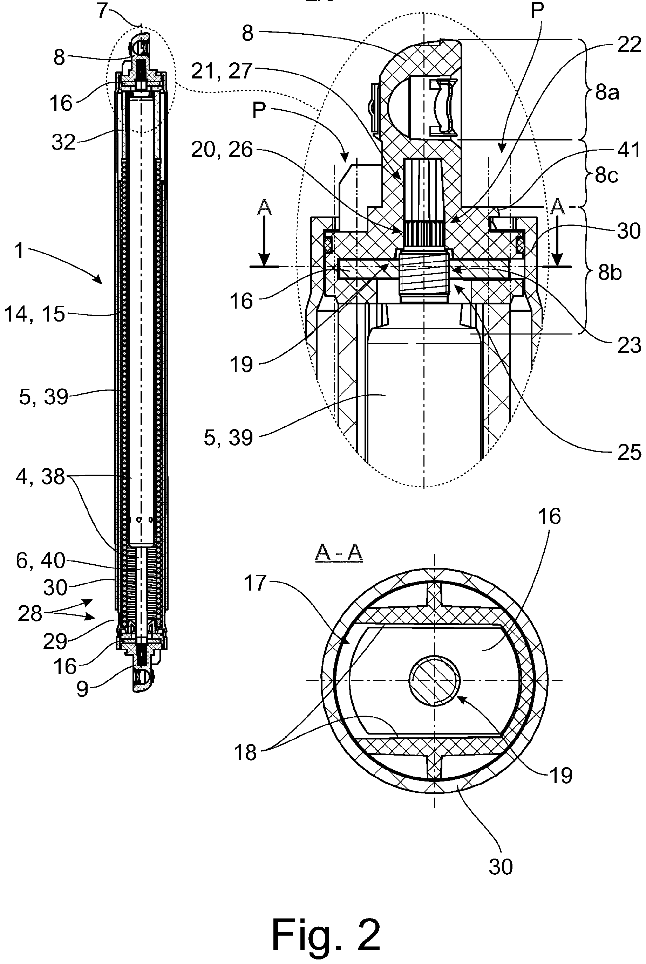

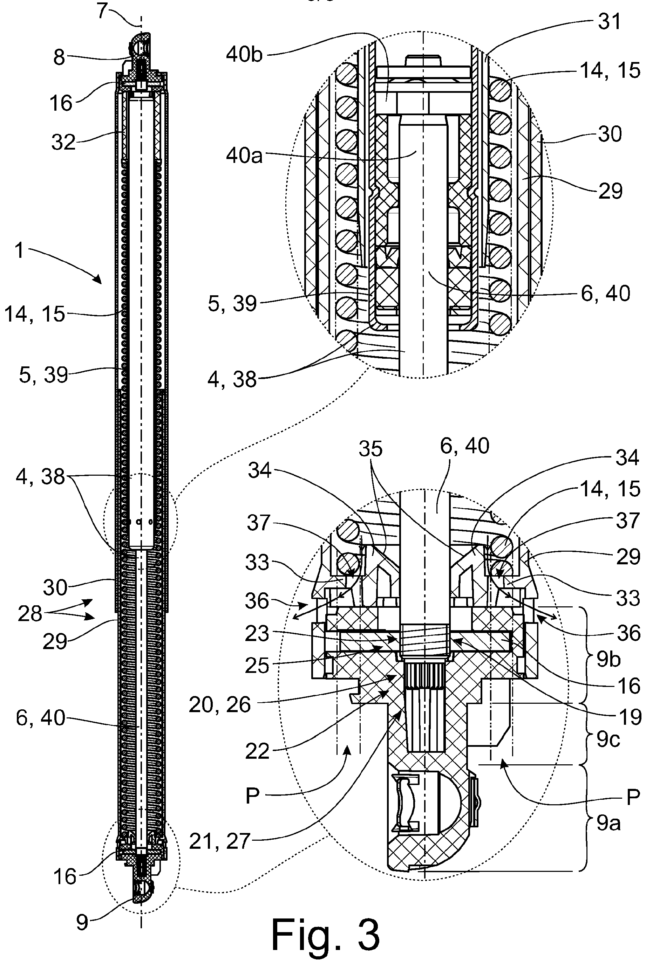

Zum Ausleiten von linearen Antriebsbewegungen an das Kraftfahrzeug 3 weist der Antrieb 1 zwei zueinander entlang der geometrischen Antriebsachse 7 zwischen einer eingefahrenen Stellung und einer ausgefahrenen Stellung verstellbare Gelenkteile 8, 9 auf, die hier und vorzugsweise baugleich sind. Das in den Figuren 2 und 3 obere Gelenkteil 8 bildet zusammen mit einem kraftfahrzeugseitigen Gegengelenkteil 10, das hier an dem Verstellelement 2 angeordnet ist, einen Antriebsanschluss 12 zur Kopplung mit dem Verstellelement 2. Das in den Figuren 2 und 3 untere Gelenkteil 9 bildet zusammen mit einem kraftfahrzeugseitigen Gegengelenkteil 11, das hier an der Kraftfahrzeugkarosserie angeordnet ist, einen Antriebsanschluss 13 zur Kopplung mit dem Kraftfahrzeug 3 im Übrigen. Hier und vorzugsweise weisen die beiden Gelenkteile 8, 9 jeweils eine Kugelpfanne auf, die mit einem Kugelkopf des jeweiligen Gegengelenkteils 10, 11 gelenkig gekoppelt sind. Grundsätzlich ist es auch denkbar, dass die Gelenkteile 8, 9 einen Kugelkopf und das Gegengelenkteil 10, 11 eine Kugelpfanne aufweist.

Wie die vergrößerten Detailansichten in den Figuren 2 und 3 zeigen, ist das eine Gelenkteil 8 mit einer zugeordneten ersten der Komponenten 5, 6 der Antriebseinheit 4, hier dem Hohlzylinder 5, und das andere Gelenkteil 9 mit einer zugeordneten zweiten der Komponenten 5, 6 der Antriebseinheit 4, hier der Stange 6, jeweils im montierten Zustand axialfest gekoppelt. Die axialfeste Kopplung wird im Weiteren noch näher erläutert.

Weiter weist der vorschlagsgemäße Antrieb 1 eine Antriebsfederanordnung 14 mit mindestens einer Antriebsfeder 15, hier genau eine Antriebsfeder 15, auf, die auf die beiden Gelenkteile 8, 9 wirkt, also darauf vorgespannt ist. Durch die Antriebsfederanordnung 14 und das in den Hohlzylinder 5 gefüllte Gas sind die Gelenkteile 8, 9 gegeneinander, hier in die ausgefahrene Stellung, vorgespannt. Die mindestens eine Antriebsfeder 15, hier die genau eine Antriebsfeder 15, ist insbesondere eine Schraubenfeder und hier und vorzugsweise eine Schraubendruckfeder. Grundsätzlich ist gemäß einer hier nicht dargestellten Ausführungsform auch denkbar, zusätzlich oder alternativ zu einer Schraubendruckfeder eine Schraubenzugfeder als Teil der Antriebsfederanordnung 14 vorzusehen.

Wesentlich ist nun, dass im montierten Zustand mindestens eine der Komponenten 5, 6 der Antriebseinheit 4, insbesondere beide Komponenten 5, 6 der Antriebseinheit 4, mit einem Sicherungselement 16 über eine Gewindeverbindung axialfest gekoppelt ist oder sind, und dass das Sicherungselement 16 radial in eine axiale Projektion P eines Federmaterials der Antriebsfederanordnung 14 ragt.

Wenn hier und im Weiteren von dem "montierten Zustand" die Rede ist, ist immer der zusammengebaute Zustand des Antriebs gemeint. In diesem Zustand besteht der axiale Formschluss zwischen dem jeweiligen Gelenkteil 8, 9 und der zugeordneten Komponente 5, 6 in beiden Richtungen, das heißt entlang der geometrischen Antriebsachse 7 sowohl in Richtung der eingefahrenen Stellung als auch in Richtung der ausgefahrenen Stellung.

Während hier und vorzugsweise auf beiden Seiten entlang der Antriebsachse 7 ein Sicherungselement 16 vorgesehen ist, damit in einem Fehlerfall, insbesondere bei einem Brand, die Antriebsfederanordnung 14 und insbesondere die Antriebsfeder 15 gegen eine schlagartige Entspannung gesichert ist, ergibt sich aus den weiteren Ausführungen noch, dass auch eine Ausführungsform, in der nur ein einzelnes vorschlagsgemäßes Sicherungselement 16 vorgesehen ist, vorteilhaft ist. Das betrifft insbesondere die einfache Montage des Sicherungselements 16, die hier und vorzugsweise nicht bei beiden Gelenkteilen 8, 9 identisch ist. Entsprechend können sich die Vorteile bei der Montage auf einer Seite mehr als auf der anderen ergeben.

Um seine Sicherungsfunktion wahrzunehmen, ragt das Sicherungselement 16 radial in die axiale Projektion P des Federmaterials. Dabei handelt es sich insbesondere um das Federmaterial der Antriebsfeder 15. Bei der bevorzugten Schraubenfeder, die insbesondere eine Schraubendruckfeder ist, handelt es sich bei der Projektion P um die Projektion der Federwindungen in einem gewissen Radius von der Antriebsachse 7 entfernt. Der Begriff "Federmaterial" betrifft somit den Bereich der Antriebsfederanordnung 14, in dem tatsächlich Material einer Antriebsfeder 15 vorhanden ist und insbesondere die Federwindungen.

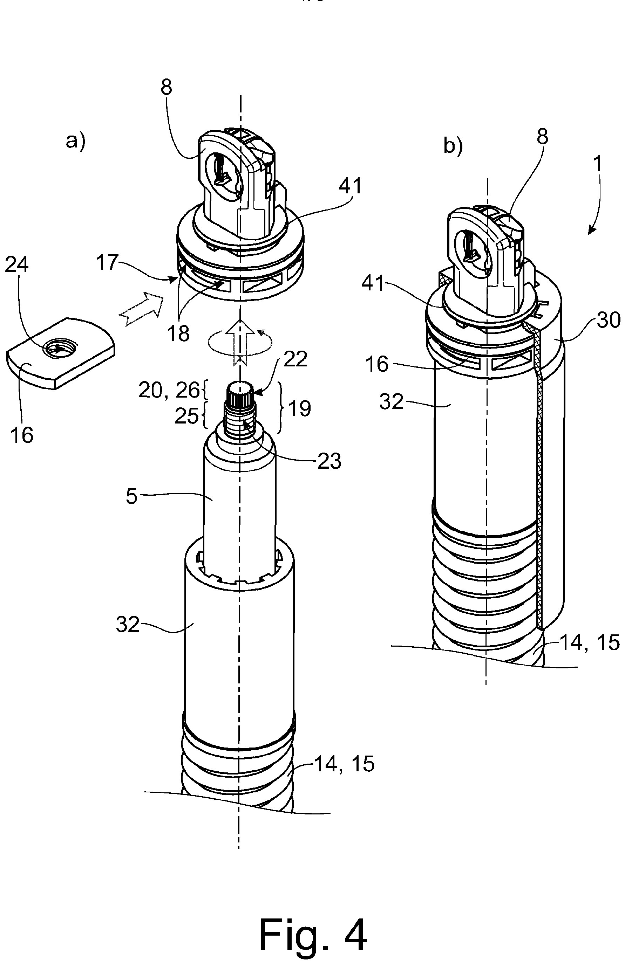

Erfindungsgemäß zur Vereinfachung der Montage, jedoch auch zur Erhöhung der Kompaktheit und der strukturellen Festigkeit des Antriebs 1, ist vorgesehen, dass eine Komponente 5, 6 der Antriebseinheit 4, insbesondere beide Komponenten 5, 6 der Antriebseinheit 4, über das Sicherungselement 16 mit dem jeweils zugeordneten Gelenkteil 8, 9 verbunden ist oder sind. Aus einer Zusammenschau der Figuren 2 und 3 geht hervor, dass dies hier für beide Komponenten 5, 6 der Antriebseinheit 4 vorgesehen ist. Beispielhaft ist dies in Fig. 4 für den Hohlzylinder 5 und das obere Gelenkteil 8 gezeigt.

Wie in Fig. 4b) dargestellt, ist das Sicherungselement 16 erfindungsgemäß in dem Gelenkteil 8, 9 aufgenommen. Diese und auch die weiteren Ausführungen, die nur bezüglich eines Gelenkteils 8, 9 gemacht werden, können ebenso für das andere Gelenkteil 8, 9 gelten.

Erfndungsgemäß bildet das Gelenkteil 8, 9 eine Aufnahme 17 aus, in die das Sicherungselement 16 aus radialer Richtung eingeführt ist. Der Vorgang des Einführens ist in Fig. 4a) dargestellt.

Grundsätzlich ist es bei dem vorschlagsgemäßen Antrieb 1 von Vorteil, wenn die unterschiedlichen Komponenten entlang der Antriebsachse 7 möglichst zentriert sind und bleiben. Dies betrifft nicht nur die Montage, sondern auch im Betrieb des Antriebs 1 kann, beispielsweise bei einer Vereisung, diese Zentrierung wichtig sein, um Schäden an weniger stabilen Teilen, insbesondere Kunststoffteilen, zu vermeiden, wenn die Vereisung bricht und einige der Komponenten des Antriebs 1 eine ruckartige Bewegung durchführen. Zusätzlich erlaubt es ein gut zentrierter Antrieb 1, mehr kostengünstige Kunststoffteile zu benutzen, da diese präziser oder weniger belastet werden. Die Gewindeverbindung insbesondere in Kombination mit der Aufnahme 17 leistet hier einen Beitrag dazu, die Komponente 5, 6 der Antriebseinheit 4 bezüglich des Gelenkteils 8, 9 zu zentrieren. Entsprechend ist das Sicherungselement 16 hier und vorzugsweise so ausgestaltet, dass es die Komponente 5, 6 bezüglich des Gelenkteils 8, 9 zentriert, insbesondere, indem die Gewindeverbindung entlang der Antriebsachse 7 ausgerichtet und/oder koaxial zu dieser ist.

Das jeweilige Gelenkteil 8, 9 weist hier und vorzugsweise einen Lagerabschnittt 8a, 9a zur Kopplung mit dem Gegengelenkteil 10, 11, hier und vorzugsweise eine Kugelpfanne, sowie beabstandet davon einen Anschlussabschnitt 8b, 9b zur Kopplung mit der jeweils zugeordneten Komponente 5, 6 der Antriebseinheit 4 auf. Der Lagerabschnitt 8a, 9a ist mit dem Anschlussabschnitt 8b, 9b über einen Verbindungsabschnitt 8c, 9c verbunden. Besonders bevorzugt sind Lagerabschnitt 8a, 9a und Verbindungsabschnitt 8c, 9c, vorzugsweise auch zusammen mit dem Anschlussabschnitt 8b, 9b, als einstückiges Bauteil ausgestaltet. Hier und vorzugsweise ist das Sicherungselement 16 in dem Anschlussabschnitt 8b, 9b, aufgenommen. Dieser bildet hier und vorzugsweise die Aufnahme 17 aus.

Bezüglich der Anordnung des Sicherungselements 16 entlang der geometrischen Antriebsachse 7 ist hier und vorzugsweise vorgesehen, dass das Sicherungselement 16 axial zwischen dem Federmaterial und zumindest einem Abschnitt 8a, 8b, 8c, 9a, 9b, 9c, insbesondere dem Lagerabschnitt 8a, 9a, des jeweiligen Gelenkteils 8, 9 angeordnet ist. Dabei kann auch vorgesehen sein, dass das Sicherungselement 16 zwischen dem gesamten Gelenkteil 8, 9 und dem Federmaterial angeordnet ist.

Hier und vorzugsweise ist das Sicherungselement 16 axial, insbesondere beidseitig, formschlüssig mit dem jeweiligen Gelenkteil 8, 9 gekoppelt. Hier und vorzugsweise kann das Sicherungselement 16 in axialer Richtung nicht oder nicht wesentlich gegenüber dem jeweiligen Gelenkteil 8, 9 bewegt werden. Insbesondere dafür steht das Sicherungselement 16 hier und vorzugsweise in direktem Kontakt mit dem Gelenkteil 8, 9.

Es kann vorgesehen sein, dass das Sicherungselement 16 insbesondere im Zusammenspiel mit der Aufnahme 17 eine Verdrehsicherung des Sicherungselements 16 gegenüber dem Gelenkteil 8, 9, und somit insbesondere der Komponente 5, 6 der Antriebseinheit 4 gegenüber dem jeweils zugeordneten Gelenkteil 8, 9, bereitstellt.

Ganz allgemein ist das Sicherungselement 16 hier und vorzugsweise in radialer Richtung flächig, insbesondere scheibenförmig, ausgebildet. Dabei kann das Sicherungselement 16 eine im Wesentlichen runde radiale Außenkontur aufweisen. Es kann jedoch auch vorgesehen sein, dass das Sicherungselement 16 eine radiale Außenkontur aufweist, die von einer runden Form abweicht. Insbesondere kann das Sicherungselement 16 eine im Wesentlichen ovale oder vieleckige radiale Außenkontur aufweisen. Gerade dadurch wird ermöglicht, dass das Sicherungselement 16 an einem, insbesondere mit dem jeweiligen Gelenkteil 8, 9 drehfest verbundenen oder mit dem jeweiligen Gelenkteil 8, 9 im Übrigen einstückig ausgestalteten, Gegenelement 18 verdrehgesichert ist. Im Ausführungsbeispiel ist das Gegenelement 18 die Aufnahme 17 bzw. wird durch die Wände der Aufnahme 17 gebildet.

Wie bereits zuvor angedeutet, ist hier und vorzugsweise der Hohlzylinder 5, und zwar an seinem dem zugeordneten bzw. damit gekoppelten Gelenkteil 8 zugewandten axialen Ende, mit einem axialen Fortsatz 19 versehen, der zu dem Hohlzylinder 5 axialfest ist.

Das Sicherungselement 16 ist dann hier und vorzugsweise im montierten Zustand auf den axialen Fortsatz 19 aufgeschraubt. Es ist hier und vorzugsweise vorgesehen, dass auch die Stange 6 einen axialen Fortsatz 19 aufweist, der jedoch hier und vorzugsweise, anders als bei dem Hohlzylinder 5, keinen gegenüber der Stange 6 reduzierten Durchmesser aufweist. Alle Ausführungen zu dem axialen Fortsatz 19 des Hohlzylinders 5 können entsprechend für den axialen Fortsatz 19 der Stange 6 gelten.

Hier und vorzugsweise weist der axiale Fortsatz 19 einen axialen Endabschnitt 20 mit einem gegenüber dem Innendurchmesser des Sicherungselements 16 reduzierten Querschnitt auf. Durch die Reduktion des Querschnitts, hier und vorzugsweise des Durchmessers, kann eine Einfädelhilfe zur Vereinfachung des Zusammenführens von Sicherungselement 16 und axialem Fortsatz 19 im Zuge der Montage bereitgestellt werden. Eine weitere bevorzugte Funktion des axialen Endabschnitts 20 wird im Folgenden noch erläutert.

Der axiale Fortsatz 19 und insbesondere der axiale Endabschnitt 20 ist oder sind hier und vorzugsweise mit dem Hohlzylinder 5 oder der Stange 6 stoffschlüssig, formschlüssig und/oder kraftschlüssig verbunden oder mit dem Hohlzylinder 5 oder der Stange 6 einstückig ausgestaltet.

Hier und vorzugsweise steht der axiale Fortsatz 19 und/oder der axiale Endabschnitt 20 in, insbesondere kraftschlüssigem und/oder stoffschlüssigem, Eingriff mit einer korrespondierenden Aufnahme 21 des jeweils zugeordneten Gelenkteils 8, 9. Diese Aufnahme 21 des Gelenkteils 8, 9 kann eine doppelte Funktion erfüllen. Zum einen kann sie für eine radiale Zentrierung der Komponente 5, 6 der Antriebseinheit 4 gegenüber dem Gelenkteil 8, 9 und somit gleichzeitig des Sicherungselements 16 sorgen, zum anderen kann vorgesehen sein, dass der axiale Endabschnitt 20 eine Oberflächenkontur 22 aufweist, die im Zusammenspiel mit der korrespondierenden Aufnahme 21 eine Verdrehsicherung, worunter auch eine Verdrehhemmung fällt, bereitstellt. Dabei ist insbesondere vorgesehen, dass die besagte Oberflächenkontur 22 geriffelt, insbesondere mit mehreren Längsrillen, und aus Metall ausgestaltet ist und sich in die Aufnahme 21 des insbesondere aus Kunststoff ausgestalteten Gelenkteils 8, 9 bei einer Drehbewegung eingräbt.

Dadurch, dass über den axialen Endabschnitt 20 und die Gewindeverbindung mit dem Sicherungselement 16 zwei axial voneinander beabstandete Kontaktbereiche zwischen der Komponente 5, 6 der Antriebseinheit 4 und dem jeweils zugeordneten Gelenkteil 8, 9 bereitgestellt werden, kann auch eine Sicherung gegen ein Verkippen der Antriebseinheit 4 gegenüber dem Gelenkteil 8, 9 bereitgestellt werden.

Hier und vorzugsweise weist der Hohlzylinder 5, insbesondere der axiale Fortsatz 19, und/oder die Stange 6 ein Außengewinde 23 auf. Das Sicherungselement 16 weist hier und vorzugsweise ein korrespondierendes Innengewinde 24 auf. Das Außengewinde 23 bildet dann mit dem Innengewinde 24 im montierten Zustand die Gewindeverbindung. Hier und vorzugsweise schließt sich am axialen Fortsatz 19 ein Gewindeabschnitt 25, der das Außengewinde 23 bildet, von außen gesehen, an den axialen Endabschnitt 20 an.

Die Gewindeverbindung ist hier und vorzugsweise gegen ein Losdrehen gesichert, wobei bekannte Maßnahmen zum Einsatz kommen können. Insbesondere kann der Gewindeabschnitt 25 des axialen Fortsatzes 19 einen unrunden Querschnitt aufweisen und/oder nicht-zylindrisch ausgestaltet sein, um das Losdrehmoment zu erhöhen.

Zusätzlich oder alternativ weist der Hohlzylinder 5, insbesondere der axiale Fortsatz 19, und/oder die Stange 6 einen Verdrehsicherungsabschnitt 26 auf, der in, insbesondere kraftschlüssigem und/oder formschlüssigem, Eingriff mit einer korrespondierenden Aufnahme 27 des jeweils zugeordneten Gelenkteils 8, 9 steht. Der Verdrehsicherungsabschnitt 26 ist hier und vorzugsweise axial außerhalb des Gewindeabschnitts 25 angeordnet. Hier und vorzugsweise bildet der axiale Endabschnitt 20 des axialen Fortsatzes 19 den Verdrehsicherungsabschnitt 26 und/oder die zum axialen Endabschnitt 20 korrespondierende Aufnahme 21 die Aufnahme 27.

In einer weiteren Ausführungsform kann der Eingriff des Innengewindes 24 mit dem Außengewinde 23 in Löserichtung selbsthemmend ausgestaltet sein.

Weiter weist, wie insbesondere die Figuren 2 und 3 veranschaulichen, der Antrieb 1 ein Antriebsgehäuse 28 mit zwei Gehäuserohren 29, 30, hier einem Gehäuseinnenrohr 29 und einem Gehäuseaußenrohr 30, die bei einer Verstellung zwischen der eingefahrenen Stellung und der ausgefahrenen Stellung teleskopartig ineinanderlaufen, auf. Die beiden Gehäuserohre 29, 30 sind hier und vorzugsweise zu einem jeweils zugeordneten der Gelenkteile 8, 9 axialfest. Hier ist das Gehäuseinnenrohr 29 zu dem in den Figuren 2 und 3 unteren Gelenkteil 9 und das Gehäuseaußenrohr 30 zu dem in den Figuren 2 und 3 oberen Gelenkteil 8 axialfest.

Die Antriebsfederanordnung 14, die hier von einer einzelnen Antriebsfeder 15 gebildet wird, aber auch von mehreren Antriebsfedern 15 gebildet sein kann, ist hier und vorzugsweise radial zwischen der Antriebseinheit 4 und dem Antriebsgehäuse 28 angeordnet. Dabei ist zur Führung der mindestens einen und hier einzigen Antriebsfeder 15 ein Federführungsrohr 31 radial zwischen der Antriebseinheit 4 und der Antriebsfederanordnung 14 angeordnet.

Wie in den Figuren gezeigt, kann zwischen der Antriebsfeder 15 und dem jeweiligen Gelenkteil 8, 9 zusätzlich auch ein Distanzstück 32 vorgesehen sein, an dem sich die Antriebsfeder 15 abstützt.

Die axialfeste Verbindung zwischen dem inneren Gehäuserohr 29 und dem zugeordneten Gelenkteil 9 erfolgt hier und vorzugsweise durch einen axialen Formschluss, derart, dass ein Gehäuseflansch 33 zwischen einem axialen Anschlag des Gelenkteils 9 und der Antriebsfederanordnung 14 axial fixiert ist. Dies kann zusätzlich zu der Kopplung über das Sicherungselement 16 vorgesehen sein. Ferner kann vorgesehen sein, dass sich das jeweilige Gehäuserohr 29, 30 im montierten Zustand axial über das jeweilige Sicherungselement 16 hinaus erstreckt und/oder das jeweilige Sicherungselement 16 radial umgibt. Das Sicherungselement 16 ist auf diese Weise radial gesichert und von außen auch nicht ohne weiteres zugänglich. Da diese radiale Sicherung hier und vorzugsweise nicht notwendig ist, kann dies auch rein optischen Gesichtspunkten dienen.

Es kann ferner, wie die vergrößerte Ansicht in Fig. 3 unten zeigt, vorgesehen sein, dass mindestens eines der Gehäuserohre 29, 30, insbesondere das innere Gehäuserohr 29, einen Zentrierungsbund 34 aufweist, der radial innerhalb des Gehäuserohres 29, 30 in axialer Richtung entlang der jeweils zugeordneten Komponente 5, 6 der Antriebseinheit 4, insbesondere des axialen Fortsatzes 19 oder der Stange 6, verläuft und vorzugsweise als Montagehilfe eine sich in axialer Richtung radial verbreiternde Aufnahme 35 für die jeweils zugeordnete Komponente 5, 6 bildet. Bei dem vorschlagsgemäßen Antrieb 1 wird bei der Montage das innere Gehäuserohr 29 blind über die Stange 6 geschoben. Um dies zu vereinfachen dient der Zentrierungsbund 34. Dieser führt durch die Schräge der Aufnahme 35 die Stange 6.

Zusätzlich oder alternativ kann der Zentrierungsbund 34 die jeweilige Komponente 5, 6 bezüglich des jeweils zugeordneten Gelenkteils 8, 9 zentrieren. Dies verhindert einerseits ein Verkippen der Komponente 5, 6 gegenüber der Antriebsachse 7 und vereinfacht andererseits die Montage am Sicherungselement 16 und/oder dem Gelenkteil 8, 9.

Hier und vorzugsweise ist der Zentrierungsbund 34 einstückig mit dem Gehäuserohr 29, 30 verbunden. Der Zentrierungsbund 34 ist hier und vorzugsweise in axialer Richtung abdichtend ausgestaltet. Dadurch kann ein Wassermanagement des Antriebs 1 verbessert werden.

Da der Antrieb 1 am Kraftfahrzeug 3 Kontakt beispielsweise zu Regenwasser haben kann, ist für das Wassermanagement hier und vorzugsweise weiterhin mindestens an einem der Gehäuserohre 29, 30, insbesondere an dem im am Kraftfahrzeug 3 montierten Zustand unteren Gehäuserohr 29, 30, mindestens eine Entwässerungsöffnung 36 vorgesehen. Hier und vorzugsweise sind mindestens zwei Entwässerungsöffnungen 36, weiter vorzugsweise mindestens drei Entwässerungsöffnungen 36, noch weiter vorzugsweise mindestens vier Entwässerungsöffnungen 36, vorgesehen. Der entsprechende Wasserfluss ist in Fig. 3 mit Pfeilen angedeutet.

Die Entwässerungsöffnung 36 verbindet einen Innenraum des Antriebs 1 mit der Umgebung fluidtechnisch. Insbesondere werden dadurch Metallteile im Inneren des Antriebs 1 vor Korrosion geschützt. Der fluidtechnisch mit der Umgebung verbundene Innenraum des Antriebs 1 ist vorzugsweise der Innenraum, der die Antriebsfeder 15 aufnimmt. Hier und vorzugsweise weist der Zentrierungsbund 34 mindestens eine Entwässerungsöffnung 37 auf. Die Entwässerungsöffnung 37 des Zentrierungsbunds 34 steht hier mit der Entwässerungsöffnung 36 des Gelenkteils 8, 9 fluidtechnisch in Kontakt.

Hier und vorzugsweise ist es weiter so, dass das jeweilige Sicherungselement 16 und/oder die mindestens eine Antriebsfeder 15 der Antriebsfederanordnung 14 und/oder die jeweilige Komponente 5, 6, also der Hohlzylinder 5 bzw. die Stange 6, und/oder der axiale Fortsatz 19 jeweils aus Metall ausgelegt ist. Zusätzlich oder alternativ ist hier vorgesehen, dass das jeweilige Gelenkteil 8, 9 und/oder das jeweilige Gehäuserohr 29, 30 aus einem Kunststoffmaterial ausgelegt ist.

Wie bereits zuvor erwähnt worden ist, ist hier und vorzugsweise der Antrieb 1 als Gasdruckfederantrieb ausgestaltet. Hier und vorzugsweise ist also die Antriebseinheit 4 als Gasdruckfeder 38 ausgestaltet, wobei die erste Komponente 5 ein gasgefüllter Gasdruckfeder-Zylinder 39 und die zweite Komponente 6 eine darin axial geführte Gasdruckfeder-Kolbenstange 40 ist. Eine Gasdruckfeder-Kolbenstange 40 ist dabei eine Einheit aus Schubstange 40a und Kolben 40b.

Wie zuvor ebenfalls angedeutet wurde, ist der vorschlagsgemäße Antrieb 1 nicht auf die Ausgestaltung als Gasdruckfederantrieb beschränkt, sondern kann auch als Spindelantrieb ausgestaltet sein. In diesem Fall ist die Antriebseinheit 4 als Spindelantriebseinheit ausgestaltet, wobei die erste Komponente 5 ein Spindelmutterrohr mit einer dazu axialfesten und drehfesten Spindelmutter und die zweite Komponente 6 eine mit der Spindelmutter kämmende Gewindespindel ist. Ein solches Spindel-Spindelmuttergetriebe ist hinlänglich bekannt und bedarf hier keiner Erläuterungen. Ein optionaler Antriebsmotor der Antriebseinheit 4 kann dann das Spindel-Spindelmuttergetriebe in üblicherweise betätigen.

Gemäß einer weiteren Lehre, der eigenständige Bedeutung zukommt, wird ein Verfahren zur Montage eines Antriebs 1 vorgeschlagen. Das Verfahren dient insbesondere zur Montage eines vorschlagsgemäßen Antriebs 1. Auf alle Ausführungen zu dem vorschlagsgemäßen Antrieb 1 darf verwiesen werden.

Wesentlich bei dem Verfahren ist, dass das innere Gehäuserohr 29 mit dem zugeordneten Gelenkteil 9, der Antriebseinheit 4 und der Federanordnung 14 verbunden wird. Dafür wird hier und vorzugsweise das innere Gehäuserohr 29 über eine der Komponenten 5, 6 der Antriebseinheit 4, insbesondere die Stange 6, und die Antriebsfeder 15 geschoben. Dabei wird das innere Gehäuserohr 29 über den Zentrierungsbund 34 zu der Komponente 5, 6 der Antriebseinheit 4 zentriert.

Das zugeordnete Gelenkteil 9 kann dabei vor oder nach dem Aufschieben mit dem inneren Gehäuserohr 29 verbunden werden. Es wird hier und vorzugsweise auf die Stange 6 nach dem Aufschieben über das Sicherungselement 16 aufgeschraubt. Es kann vorgesehen sein, dass die Antriebsfeder 15 beim Aufschieben des inneren Gehäuserohrs 29, insbesondere extern, komprimiert wird.

Nach dem Verbinden des inneren Gehäuserohrs 29 mit dem zugeordneten Gelenkteil 9, der Antriebseinheit 4 und der Federanordnung 14 wird hier und vorzugsweise das Sicherungselement 16, wie in Fig. 4a) gezeigt, in das andere Gelenkteil 8 eingeführt. Danach wird das Gelenkteil 8 über das Sicherungselement 16 mit der zugeordneten Komponente 6 der Antriebseinheit 4, insbesondere dem axialen Fortsatz 19, zur Bildung der Gewindeverbindung verschraubt. Hier und vorzugsweise ist währenddessen die Antriebsfeder 15, wie in Fig. 4a) zu sehen, komprimiert. Das äußere Gehäuserohr 30 kann anschließend über das Gelenkteil 8 geschoben werden und rastet an diesem ein. Für das Einrasten kann das Gelenkteil 8 einen Bund 41 aufweisen. Da hier und vorzugsweise die Gelenkteile 8, 9 baugleich sind, um Produktionskosten zu sparen, kann der Bund 41 auch an dem anderen Gelenkteil 9 vorgesehen sein. Insbesondere dem Zentrierungsbund 34 und dem damit verbundenen Wassermanagement kommen, nicht nur im Rahmen des Verfahrens, auch eigene Bedeutung zu.

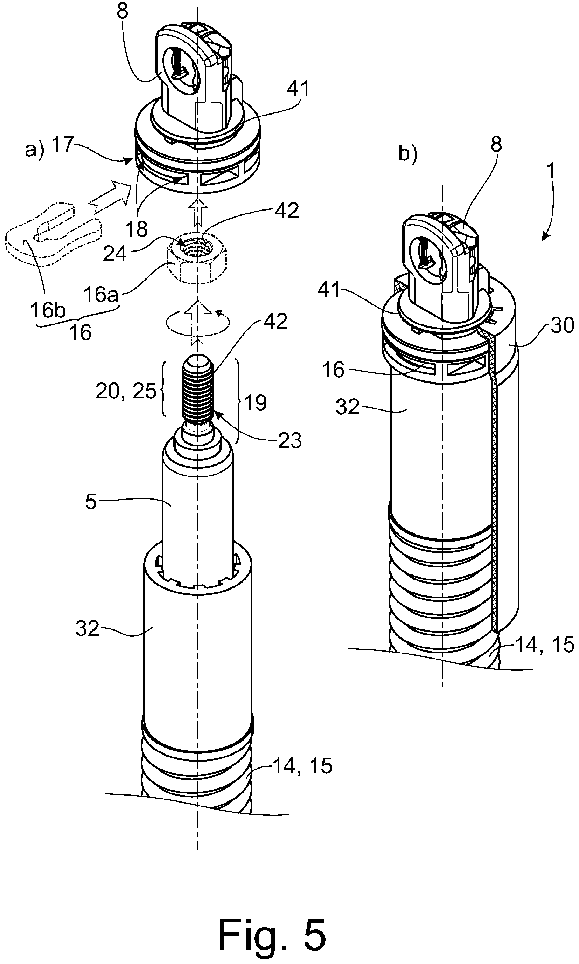

Fig. 5 zeigt korrespondierend zu Fig. 4 eine alternative Ausführungsform des zuvor beschriebenen vorschlagsgemäßen Antriebs 1 während und nach der Montage. Dieser Antrieb 1 unterscheidet sich von dem in den Figuren 2 bis 4 gezeigten Antrieb 1 dadurch, dass hier das Sicherungselement 16 nicht einteilig, sondern mehrteilig, hier und vorzugsweise zweiteilig, ausgestaltet ist. So wird das Sicherungselement 16 hier und vorzugsweise von einem ersten Sicherungselementteil 16a und zweiten Sicherungselementteil 16b gebildet, die zusammen die Funktionen des einteiligen Sicherungselements 16 der Figuren 2 bis 4 bewerkstelligen, nämlich zum einen die axialfeste Kopplung des Sicherungselements 16 mit der jeweiligen Komponenten 5, 6 der Antriebseinheit 4 über eine Gewindeverbindung (erste Funktion), und zum anderen, dass das Sicherungselement 16 radial in die axiale Projektion P des Federmaterials der Antriebsfederanordnung 14 ragt (zweite Funktion).

Hier und vorzugsweise ist das erste Sicherungselementteil 16a für die erste Funktion und das zweite Sicherungselementteil 16b für die zweite Funktion vorgesehen.

Das erste Sicherungselementteil 16a ist dazu insbesondere als Schraubenmutter mit einem zum Außengewinde 23 korrespondierenden Innengewinde 24 ausgestaltet. Radial außenseitig ist das erste Sicherungselementteil 16a unrund, insbesondere eckig, hier als Sechskant, ausgestaltet, wobei hier und vorzugsweise im jeweiligen Gelenkteil 8, 9 die bereits beschriebene Aufnahme 21 vorgesehen ist, die hier zum ersten Sicherungselementteil 16a, insbesondere zu dessen unrunder radialer Außenseite, korrespondiert.

Weiter ist hier und vorzugsweise das zweite Sicherungselementteil 16b als Formschlusselement, das radial in die axiale Projektion P des Federmaterials der Antriebsfederanordnung 14 ragt, ausgestaltet. Hier ist das zweite Sicherungselementteil 16b insbesondere eine sprengringartige Klammer, die zwei Schenkel aufweist, zwischen denen, jedenfalls im montierten und hier auch im unmontierten Zustand, ein Zwischenraum ausgebildet ist, in dem im montierten Zustand der axiale Fortsatz 19 verläuft.

Wie in Fig. 5a) gezeigt, wird auch hier im Zuge der Montage vorzugsweise, korrespondierend zu der in Fig. 4a) gezeigten Vorgehensweise, das Sicherungselement 16 zunächst in das zugeordnete Gelenkteil 8 eingeführt und danach das Gelenkteil 8 über das Sicherungselement 16 mit der zugeordneten Komponente 6 der Antriebseinheit 4, insbesondere dem axialen Fortsatz 19, zur Bildung der Gewindeverbindung verschraubt.

Das Einführen des Sicherungselements 16 in das zugeordnete Gelenkteil 8 umfasst hier mehrere, insbesondere zwei, Montageschritte, nämlich zum einen das axiale, insbesondere verdrehgesicherte, Einsetzen des ersten Sicherungselementteils 16a in die Aufnahme 21 und zum anderen, insbesondere danach, das radiale Einführen des zweiten Sicherungselementteils 16b in die Aufnahme 17. Dabei ragt hier und vorzugsweise das zweite Sicherungselementteil 16b, insbesondere mit seinen Schenkeln, radial in eine axiale Projektion des Materials des ersten Sicherungselementteils 16a, sodass das erste Sicherungselementteil 16a axial in dem zugeordneten Gelenkteil 8 gesichert wird.

Das Verschrauben des Gelenkteils 8 mit der zugeordneten Komponente 6 der Antriebseinheit 4, insbesondere dem axialen Fortsatz 19, über das Sicherungselement 16 erfolgt hier durch Verschrauben des ersten Sicherungselementteils 16a mit dem Außengewinde 23. Dabei kann das Außengewinde 23 und/oder das Innengewinde 24 vor der Montage mit einer Mikroverkapselung 42 versehen sein, die im montierten Zustand ein Losdrehen im Betrieb verhindert oder erschwert. Es ist dabei denkbar, dass die Mikroverkapselung 42 eine mikroverkapselten Klebstoff aufweist, der beim Verschrauben aktiviert wird.

## Patentansprüche

1. Antrieb zur Verstellung eines Verstellelements (2), insbesondere einer Klappe, eines Kraftfahrzeugs (3), wobei der Antrieb (1) eine Antriebseinheit (4) aufweist, die als eine Antriebskraft übertragende Komponenten einen Hohlzylinder (5) und eine darin axial geführte Stange (6) aufweist, wobei der Antrieb (1) zum Ausleiten von linearen Antriebsbewegungen an das Kraftfahrzeug (3) zwei zueinander entlang einer geometrischen Antriebsachse (7) zwischen einer eingefahrenen Stellung und einer ausgefahrenen Stellung verstellbare Gelenkteile (8, 9) aufweist, die jeweils mit einem kraftfahrzeugseitigen Gegengelenkteil (10, 11) einen Antriebsanschluss (12, 13) zur Kopplung mit dem Verstellelement (2) einerseits und dem Kraftfahrzeug (3) im Übrigen andererseits bilden, wobei das eine Gelenkteil (8) mit einer zugeordneten ersten der Komponenten (5, 6) der Antriebseinheit (4), insbesondere dem Hohlzylinder (5), und das andere Gelenkteil (9) mit einer zugeordneten zweiten der Komponenten (5, 6) der Antriebseinheit (4), insbesondere der Stange (6), jeweils im montierten Zustand axialfest gekoppelt ist, und wobei der Antrieb (1) eine Antriebsfederanordnung (14) mit mindestens einer Antriebsfeder (15) aufweist, die auf die beiden Gelenkteile (8, 9) wirkt,
wobei im montierten Zustand mindestens eine der Komponenten (5, 6) der Antriebseinheit (4), insbesondere beide Komponenten (5, 6) der Antriebseinheit (4), mit einem Sicherungselement über eine Gewindeverbindung axialfest gekoppelt ist oder sind, und wobei
das Sicherungselement (16) radial in eine axiale Projektion (P) eines Federmaterials der Antriebsfederanordnung (14) ragt, und
wobei eine Komponente (5, 6) der Antriebseinheit (4), insbesondere beide Komponenten (5, 6) der Antriebseinheit (4), über das Sicherungselement (16) mit dem jeweils zugeordneten Gelenkteil (8, 9) verbunden ist oder sind und wobei das Sicherungselement (16) in dem Gelenkteil (8, 9) aufgenommen ist, **dadurch gekennzeichnet,**
**dass** das Gelenkteil (8, 9) eine Aufnahme (17) ausbildet, in die das Sicherungselement (16) oder ein Sicherungselementteil (16b) des Sicherungselements (16) aus radialer Richtung eingeführt ist.

2. Antrieb nach Anspruch 1, **dadurch gekennzeichnet, dass** das Sicherungselement (16) axial zwischen dem Federmaterial und zumindest einem Abschnitt (8a, 8b, 8c, 9a, 9b, 9c), insbesondere Lagerabschnitt (8a, 9a), des jeweiligen Gelenkteils (8, 9) angeordnet ist, vorzugsweise, dass das Sicherungselement (16) axial, insbesondere beidseitig, formschlüssig mit dem jeweiligen Gelenkteil (8, 9) gekoppelt ist.

3. Antrieb nach einem der vorhergehenden Ansprüche, **dadurch gekennzeichnet, dass** das Sicherungselement (16) in radialer Richtung flächig, insbesondere scheibenförmig, ausgebildet ist, und/oder, dass das Sicherungselement (16) eine radiale Außenkontur aufweist, die von einer runden Form abweicht, und/oder, dass das Sicherungselement (16) eine im Wesentlichen ovale oder runde oder vieleckige radiale Außenkontur aufweist, vorzugsweise, dass das Sicherungselement (16) an einem, insbesondere mit dem jeweiligen Gelenkteil (8, 9) drehfest verbundenen oder mit dem jeweiligen Gelenkteil (8, 9) im Übrigen einstückig ausgestalteten, Gegenelement (18) verdrehgesichert ist.

4. Antrieb nach einem der vorhergehenden Ansprüche, **dadurch gekennzeichnet, dass** der Hohlzylinder (5) an seinem dem zugeordneten Gelenkteil (8) zugewandten axialen Ende mit einem axialen Fortsatz (19) versehen ist, der zu dem Hohlzylinder (5) axialfest ist, und dass das Sicherungselement (16) im montierten Zustand auf den axialen Fortsatz (19) aufgeschraubt ist, vorzugsweise, dass der axiale Fortsatz (19) einen axialen Endabschnitt (20) mit einem gegenüber dem Innendurchmesser des Sicherungselements (16) reduzierten Querschnitt aufweist.

5. Antrieb nach Anspruch 4, **dadurch gekennzeichnet, dass** der axiale Fortsatz (19) und/oder der axiale Endabschnitt (20) in, insbesondere kraftschlüssigem, Eingriff mit einer korrespondierenden Aufnahme (21) des jeweils zugeordneten Gelenkteils (8, 9) steht.

6. Antrieb nach einem der vorhergehenden Ansprüche, **dadurch gekennzeichnet, dass** der Hohlzylinder (5), insbesondere der axiale Fortsatz (19), und/oder die Stange (5) ein Außengewinde (23) aufweist, dass das Sicherungselement (16) ein korrespondierendes Innengewinde (24) aufweist und dass das Außengewinde (23) mit dem Innengewinde (24) im montierten Zustand die Gewindeverbindung bildet, vorzugsweise, dass sich am axialen Fortsatz (19) ein Gewindeabschnitt (25), der das Außengewinde (23) bildet, an den axialen Endabschnitt (20) anschließt.

7. Antrieb nach einem der vorhergehenden Ansprüche, **dadurch gekennzeichnet, dass** die Gewindeverbindung gegen ein Losdrehen gesichert ist, und/oder, dass der Hohlzylinder (6), insbesondere der axiale Fortsatz (19), und/oder die Stange (5) einen Verdrehsicherungsabschnitt (26), insbesondere einen axial außerhalb des Gewindeabschnitts (25) angeordneten Verdrehsicherungsabschnitt (26), aufweist, der in, insbesondere kraftschlüssigem, Eingriff mit einer korrespondierenden Aufnahme (27) des jeweils zugeordneten Gelenkteils (8, 9) steht, vorzugsweise, dass der axiale Endabschnitt des axialen Fortsatzes (19) den Verdrehsicherungsabschnitt (26) bildet, und/oder, dass der Eingriff des Innengewindes (24) mit dem Außengewinde (23) in Löserichtung selbsthemmend ausgestaltet ist.

8. Antrieb nach einem der vorhergehenden Ansprüche, **dadurch gekennzeichnet, dass** der Antrieb (1) ein Antriebsgehäuse (28) mit einem inneren und einem äußeren Gehäuserohr (29, 30), die bei einer Verstellung zwischen der eingefahrenen Stellung und der ausgefahrenen Stellung teleskopartig ineinanderlaufen, aufweist, vorzugsweise, dass die beiden Gehäuserohre (29, 30) zu einem jeweils zugeordneten der Gelenkteile (8, 9) axialfest sind.

9. Antrieb nach einem der vorhergehenden Ansprüche, **dadurch gekennzeichnet, dass** die Antriebsfederanordnung (14) radial zwischen der Antriebseinheit (4) und dem Antriebsgehäuse (28) angeordnet ist, vorzugsweise, dass ein Federführungsrohr (31) radial zwischen der Antriebseinheit (4) und der Antriebsfederanordnung (14) angeordnet ist.

10. Antrieb nach einem Anspruch 8 oder 9, **dadurch gekennzeichnet, dass** mindestens eines der Gehäuserohre (29, 30), insbesondere das innere Gehäuserohr (29), einen Zentrierungsbund (34) aufweist, der radial innerhalb des Gehäuserohres (29, 30) in axialer Richtung entlang der jeweils zugeordneten Komponente (5, 6) der Antriebseinheit (4), insbesondere des axialen Fortsatzes (19) oder der Stange (6), verläuft und vorzugsweise als Montagehilfe eine sich in axialer Richtung radial verbreiternde Aufnahme (35) für die jeweils zugeordnete Komponente (5, 6) bildet und/oder die jeweilige Komponente (5, 6) bezüglich des jeweils zugeordneten Gelenkteils (8, 9) zentriert, weiter vorzugsweise, dass der Zentrierungsbund (34) in axialer Richtung abdichtend ausgestaltet ist.

11. Antrieb nach einem der vorhergehenden Ansprüche, **dadurch gekennzeichnet, dass** mindestens eines der Gehäuserohre (29, 30) mindestens eine Entwässerungsöffnung (36), vorzugsweise mindestens zwei Entwässerungsöffnungen (36), weiter vorzugsweise mindestens drei Entwässerungsöffnungen (36), noch weiter vorzugsweise mindestens vier Entwässerungsöffnungen (36), aufweist, die einen Innenraum des Antriebs (1) mit der Umgebung fluidtechnisch verbinden, vorzugsweise, dass der Zentrierungsbund (34) mindestens eine Entwässerungsöffnung (37) aufweist und dass die Entwässerungsöffnung (36) des Gelenkteils mit der Entwässerungsöffnung (37) des Zentrierungsbunds fluidtechnisch in Kontakt steht.

12. Antrieb nach einem der vorhergehenden Ansprüche, **dadurch gekennzeichnet, dass** das Sicherungselement (16) und/oder die mindestens eine Antriebsfeder (15) der Antriebsfederanordnung (14) und/oder die jeweilige Komponente (5, 6) der Antriebseinheit (4) und/oder der axiale Fortsatz (19) aus Metall ausgelegt ist, und/oder, dass das jeweilige Gelenkteil (8, 9) und/oder das jeweilige Gehäuserohr (29, 30) aus einem Kunststoffmaterial ausgelegt ist.

13. Antrieb nach einem der vorhergehenden Ansprüche, **dadurch gekennzeichnet, dass** die Antriebseinheit (4) als Gasdruckfeder (38) ausgestaltet ist, wobei die erste Komponente (5) ein gasgefüllter Gasdruckfeder-Zylinder (39) und die zweite Komponente (6) eine darin axialgeführte Gasdruckfeder-Kolbenstange (40) ist, oder, dass die Antriebseinheit (4) als Spindelantriebseinheit ausgestaltet ist, wobei die erste Komponente (5) ein Spindelmutterrohr mit einer dazu axialfesten und drehfesten Spindelmutter und die zweite Komponente (6) eine mit der Spindelmutter kämmende Gewindespindel ist.

14. Verfahren zur Montage eines Antriebsnach einem der vorhergehenden Ansprüche, **dadurch gekennzeichnet, dass** das innere Gehäuserohr (29) mit dem zugeordneten Gelenkteil (9), der Antriebseinheit (4) und der Federanordnung (14) verbunden wird, vorzugsweise, indem das innere Gehäuserohr (29) über eine der Komponenten (5, 6) der Antriebseinheit (4), insbesondere die Stange (6), und die Antriebsfeder (15) geschoben wird, und dabei über den Zentrierungsbund (34) zu der Komponente (6) der Antriebseinheit (4) zentriert wird.

15. Verfahren nach Anspruch 14, **dadurch gekennzeichnet, dass** danach das Sicherungselement (16) in das andere Gelenkteil (8) eingeführt wird, dass danach das Gelenkteil (8) über das Sicherungselement (16) mit der zugeordneten Komponente (5) der Antriebseinheit (4), insbesondere dem axialen Fortsatz (19), zur Bildung der Gewindeverbindung verschraubt wird, vorzugsweise, dass danach das äußere Gehäuserohr (30) über das Gelenkteil (8) geschoben wird und an diesem einrastet.

## Claims

1. Drive for adjusting an adjustment element (2), in particular a flap, of a motor vehicle (3), wherein the drive (1) has a drive unit (4) which has a hollow cylinder (5) and a rod (6), which is guided axially therein, as components transmitting a driving force, wherein, in order to conduct linear driving movements to the motor vehicle (3), the drive (1) has two joint parts (8, 9) which are adjustable with respect to each other along a geometrical drive axis (7) between a retracted position and an extended position and which, in each case with a mating joint part (10, 11) on the motor vehicle side, form a drive connection (12, 13) for coupling to the adjustment element (2) at one end and to the motor vehicle (3) furthermore at the other end, wherein, in each case in the mounted state, the one joint part (8) is coupled in an axially fixed manner to an associated first of the components (5, 6) of the drive unit (4), in particular to the hollow cylinder (5), and the other joint part (9) is coupled in an axially fixed manner to an associated second of the components (5, 6) of the drive unit (4), in particular to the rod (6), and wherein the drive (1) has a drive spring assembly (14) having at least one drive spring (15) which acts on the two joint parts (8, 9) ,
wherein, in the mounted state, at least one of the components (5, 6) of the drive unit (4), in particular both components (5, 6) of the drive unit (4), is or are coupled in an axially fixed manner to a securing element via a threaded connection, and wherein the securing element (16) projects radially into an axial projection (P) of a spring material of the drive spring assembly (14), and wherein one component (5, 6) of the drive unit (4), in particular both components (5, 6) of the drive unit (4), is or are connected to the respectively associated joint part (8, 9) via the securing element (16), and wherein the securing element (16) is accommodated in the joint part (8, 9),
**characterized in that** the joint part (8, 9) forms a receptacle (17) into which the securing element (16) or a securing element part (16b) of the securing element (16) is introduced from the radial direction.

2. Drive according to Claim 1, **characterized in that** the securing element (16) is arranged axially between the spring material and at least one portion (8a, 8b, 8c, 9a, 9b, 9c), in particular bearing portion (8a, 9a), of the respective joint part (8, 9), preferably **in that** the securing element (16) is coupled axially, in particular on both sides, to the respective joint part (8, 9) in a form-fitting manner.

3. Drive according to either of the preceding claims, **characterized in that** the securing element (16) is configured to be flat, in particular disc-shaped, in the radial direction, and/or **in that** the securing element (16) has a radial outer contour which deviates from a round shape, and/or **in that** the securing element (16) has a substantially oval or round or polygonal radial outer contour, preferably **in that** the securing element (16) is secured against rotation on a mating element (18) which in particular is connected non-rotatably to the respective joint part (8, 9) or is furthermore formed integrally with the respective joint part (8, 9).

4. Drive according to one of the preceding claims, **characterized in that** the hollow cylinder (5), at its axial end facing the associated joint part (8), is provided with an axial extension (19) which is axially fixed with respect to the hollow cylinder (5), and **in that**, in the mounted state, the securing element (16) is screwed onto the axial extension (19), preferably **in that** the axial extension (19) has an axial end portion (20) with a cross section which is reduced in relation to the inside diameter of the securing element (16).

5. Drive according to Claim 4, **characterized in that** the axial extension (19) and/or the axial end portion (20) is in, in particular force-fitting, engagement with a corresponding receptacle (21) of the respectively associated joint part (8, 9).

6. Drive according to one of the preceding claims, **characterized in that** the hollow cylinder (5), in particular the axial extension (19), and/or the rod (5) has an external thread (23), **in that** the securing element (16) has a corresponding internal thread (24), and **in that** the external thread (23) together with the internal thread (24) in the mounted state forms the threaded connection, preferably **in that**, on the axial extension (19), a threaded portion (25) which forms the external thread (23) adjoins the axial end portion (20).

7. Drive according to one of the preceding claims, **characterized in that** the threaded connection is secured against loosening, and/or **in that** the hollow cylinder (6), in particular the axial extension (19), and/or the rod (5) has a securing against rotation portion (26), in particular a securing against rotation portion (26) which is arranged axially outside the threaded portion (25) and which is in, in particular force-fitting, engagement with a corresponding receptacle (27) of the respectively associated joint part (8, 9), preferably **in that** the axial end portion of the axial extension (19) forms the securing against rotation portion (26), and/or **in that** the engagement of the internal thread (24) with the external thread (23) is configured to be self-locking in the release direction.

8. Drive according to one of the preceding claims, **characterized in that** the drive (1) has a drive housing (28) with an inner and an outer housing tube (29, 30), which housing tubes run telescopically one into the other during an adjustment between the retracted position and the extended position, preferably **in that** the two housing tubes (29, 30) are axially fixed with respect to one respectively associated joint part of the joint parts (8, 9) .

9. Drive according to one of the preceding claims, **characterized in that** the drive spring assembly (14) is arranged radially between the drive unit (4) and the drive housing (28), preferably **in that** a spring guide tube (31) is arranged radially between the drive unit (4) and the drive spring assembly (14).

10. Drive according to Claim 8 or 9, **characterized in that** at least one of the housing tubes (29, 30), in particular the inner housing tube (29), has a centring collar (34) which runs radially within the housing tube (29, 30) in the axial direction along the respectively associated component (5, 6) of the drive unit (4), in particular the axial extension (19) or the rod (6), and preferably, as an installation aid, forms a receptacle (35), which widens radially in the axial direction, for the respectively associated component (5, 6) and/or centres the respective component (5, 6) with respect to the respectively associated joint part (8, 9), furthermore preferably **in that** the centring collar (34) is configured to provide a seal in the axial direction.

11. Drive according to one of the preceding claims, **characterized in that** at least one of the housing tubes (29, 30) has at least one drainage opening (36), preferably at least two drainage openings (36), furthermore preferably at least three drainage openings (36), even furthermore preferably at least four drainage openings (36), said drainage openings fluidically connecting an internal space of the drive (1) to the surroundings, preferably **in that** the centring collar (34) has at least one drainage opening (37), and **in that** the drainage opening (36) of the joint part is fluidically in contact with the drainage opening (37) of the centring collar.

12. Drive according to one of the preceding claims, **characterized in that** the securing element (16) and/or the at least one drive spring (15) of the drive spring assembly (14) and/or the respective component (5, 6) of the drive unit (4) and/or the axial extension (19) are/is made from metal, and/or **in that** the respective joint part (8, 9) and/or the respective housing tube (29, 30) are/is made from a plastics material.

13. Drive according to one of the preceding claims, **characterized in that** the drive unit (4) is configured as a gas pressure spring (38), wherein the first component (5) is a gas-filled gas pressure spring cylinder (39) and the second component (6) is a gas pressure spring piston rod (40) guided axially therein, or **in that** the drive unit (4) is configured as a spindle drive unit, wherein the first component (5) is a spindle nut tube with a spindle nut axially fixed and rotationally fixed with respect thereto, and the second component (6) is a threaded spindle meshing with the spindle nut.

14. Method for installing a drive according to one of the preceding claims, **characterized in that** the inner housing tube (29) is connected to the associated joint part (9), to the drive unit (4) and to the spring assembly (14), preferably by the inner housing tube (29) being pushed over one of the components (5, 6) of the drive unit (4), in particular the rod (6), and the drive spring (15), and, in the process, being centred via the centring collar (34) with respect to the component (6) of the drive unit (4).

15. Method according to Claim 14, **characterized in that** subsequently the securing element (16) is introduced into the other joint part (8), **in that** subsequently the joint part (8) is screwed via the securing element (16) to the associated component (5) of the drive unit (4), in particular to the axial extension (19), in order to form the threaded connection, preferably **in that** subsequently the outer housing tube (30) is pushed over the joint part (8) and latches to the latter.

## Revendications

1. Ensemble d'entraînement pour le réglage d'un élément de fermeture (2), en particulier d'un hayon, d'un véhicule automobile (3), l'ensemble d'entraînement (1) présentant une unité d'entraînement (4) qui présente comme composants transmettant une force d'entraînement un cylindre creux (5) et une tige (6) guidée axialement dans celui-ci, l'ensemble d'entraînement (1) présentant, pour transmettre des mouvements d'entraînement linéaires au véhicule automobile (3), deux parties d'articulation (8, 9) réglables l'une par rapport à l'autre le long d'un axe d'entraînement géométrique (7) entre une position rentrée et une position sortie, qui forment chacune, avec une partie d'articulation en regard (10, 11) côté véhicule automobile, un raccord d'entraînement (12, 13) pour l'accouplement avec l'élément de fermeture (2) d'une part et le véhicule automobile (3) d'autre part, l'une des parties d'articulation (8) étant reliée à un premier composant associé (5, 6) de l'unité d'entraînement (4), en particulier le cylindre creux (5), et l'autre partie d'articulation (9) étant reliée de manière axialement fixe à un deuxième composant associé parmi les composants (5, 6) de l'unité d'entraînement (4), en particulier la tige (6), respectivement à l'état monté, et l'ensemble d'entraînement (1) présentant un agencement (14) de ressort d'entraînement avec au moins un ressort d'entraînement (15) qui agit sur les deux parties d'articulation (8, 9),
dans lequel, à l'état monté, au moins l'un des composants (5, 6) de l'unité d'entraînement (4), en particulier les deux composants (5, 6) de l'unité d'entraînement (4), est ou sont relié(s) de manière axialement fixe à un élément de blocage par l'intermédiaire d'une liaison filetée, et dans lequel l'élément de blocage (16) fait saillie radialement dans une projection axiale (P) d'un matériau à ressort de l'agencement (14) de ressort d'entraînement, et
dans lequel un composant (5, 6) de l'unité d'entraînement (4), en particulier les deux composants (5, 6) de l'unité d'entraînement (4), est ou sont relié(s) par l'intermédiaire de l'élément de blocage (16) à la partie d'articulation (8, 9) respectivement associée, et dans lequel l'élément de blocage (16) est reçu dans la partie d'articulation (8, 9),
**caractérisé**
**en ce que** la partie d'articulation (8, 9) forme un logement (17) dans lequel l'élément de blocage (16) ou une partie d'élément de blocage (16b) de l'élément de blocage (16) est introduit(e) à partir de la direction radiale.

2. Ensemble d'entraînement selon la revendication 1, **caractérisé en ce que** l'élément de blocage (16) est disposé axialement entre le matériau à ressort et au moins une section (8a, 8b, 8c, 9a, 9b, 9c), en particulier une section de palier (8a, 9a), de la partie d'articulation respective (8, 9), de préférence **en ce que** l'élément de blocage (16) est relié axialement, en particulier des deux côtés, par complémentarité de formes, à la partie d'articulation respective (8, 9).

3. Ensemble d'entraînement selon l'une des revendications précédentes, **caractérisé en ce que** l'élément de blocage (16) est plat dans la direction radiale, en particulier est en forme de disque, et/ou **en ce que** l'élément de blocage (16) présente un contour extérieur radial qui s'écarte d'une forme ronde, et/ou, **en ce que** l'élément de blocage (16) présente un contour extérieur radial essentiellement ovale ou rond ou polygonal, de préférence **en ce que** l'élément de blocage (16) est bloqué en rotation sur un contre-élément (18), en particulier est relié de manière solidaire en rotation à la partie d'articulation respective (8, 9) ou est par ailleurs conçu d'un seul tenant avec la partie d'articulation respective (8, 9).

4. Ensemble d'entraînement selon l'une des revendications précédentes, **caractérisé en ce que** le cylindre creux (5) est pourvu, à son extrémité axiale tournée vers la partie d'articulation (8) associée, d'une extension axiale (19) qui est fixe axialement par rapport au cylindre creux (5), et **en ce que** l'élément de blocage (16) est vissé à l'état monté sur l'extension axiale (19), de préférence **en ce que** l'extension axiale (19) présente une section d'extrémité axiale (20) ayant une section transversale réduite par rapport au diamètre intérieur de l'élément de blocage (16).

5. Ensemble d'entraînement selon la revendication 4, **caractérisé en ce que** l'extension axiale (19) et/ou la section d'extrémité axiale (20) est en prise, en particulier par adhérence, avec un logement correspondant (21) de la partie d'articulation (8, 9) respectivement associée.

6. Ensemble d'entraînement selon l'une des revendications précédentes, **caractérisé en ce que** le cylindre creux (5), en particulier l'extension axiale (19), et/ou la tige (5) présente un filetage extérieur (23), **en ce que** l'élément de blocage (16) présente un filetage intérieur (24) correspondant, et **en ce que** le filetage extérieur (23) forme la liaison filetée avec le filetage intérieur (24) à l'état monté, de préférence **en ce que**, sur l'extension axiale (19), une portion filetée (25), qui forme le filetage extérieur (23), se raccorde à la section d'extrémité axiale (20).

7. Ensemble d'entraînement selon l'une des revendications précédentes, **caractérisé en ce que** la liaison filetée est protégée à l'égard d'un desserrage, et/ou **en ce que** le cylindre creux (6), en particulier l'extension axiale (19), et/ou la tige (5), comporte une section de blocage en rotation (26), en particulier une section de blocage en rotation (26) disposée axialement à l'extérieur de la portion filetée (25), qui est en prise, en particulier par adhérence, avec un logement (27) correspondant de la partie d'articulation (8, 9) respectivement associée, de préférence **en ce que** la section d'extrémité axiale de l'extension axiale (19) forme la section de blocage en rotation (26), et/ou **en ce que** la prise du filetage intérieur (24) avec le filetage extérieur (23) est conçue de manière autobloquante dans le sens du desserrage.

8. Ensemble d'entraînement selon l'une des revendications précédentes, **caractérisé en ce que** l'ensemble d'entraînement (1) présente un boîtier (28) d'ensemble d'entraînement ayant un tube de boîtier intérieur et un tube de boîtier extérieur (29, 30) qui se rejoignent de manière télescopique lors d'un réglage entre la position rentrée et la position sortie, de préférence **en ce que** les deux tubes de boîtier (29, 30) sont axialement fixes par rapport à l'une des parties d'articulation (8, 9) respectivement associée.

9. Ensemble d'entraînement selon l'une des revendications précédentes, **caractérisé en ce que** l'agencement (14) de ressort d'entraînement est disposé radialement entre l'unité d'entraînement (4) et le boîtier (28) d'ensemble d'entraînement, de préférence **en ce qu'**un tube de guidage de ressort (31) est disposé radialement entre l'unité d'entraînement (4) et l'agencement (14) de ressort d'entraînement.

10. Ensemble d'entraînement selon l'une parmi la revendication 8 ou la revendication 9, **caractérisé en ce qu'**au moins l'un des tubes de boîtier (29, 30), en particulier le tube de boîtier intérieur (29), présente un collier de centrage (34) qui est disposé radialement à l'intérieur du tube de boîtier (29, 30) dans la direction axiale le long du composant (5, 6) respectivement associé de l'unité d'entraînement (4), en particulier de l'extension axiale (19) ou de la tige (6), et forme de préférence, en tant qu'aide au montage, un logement (35) s'élargissant radialement dans la direction axiale pour le composant (5, 6) respectivement associé et/ou centre le composant (5, 6) respectif par rapport à la partie d'articulation (8, 9) respectivement associée, de préférence encore **en ce que** le collier de centrage (34) est réalisé de manière étanche dans la direction axiale.

11. Ensemble d'entraînement selon l'une des revendications précédentes, **caractérisé en ce qu'**au moins l'un des tubes de boîtier (29, 30) comporte au moins une ouverture de drainage (36), de préférence au moins deux ouvertures de drainage (36), de préférence encore au moins trois ouvertures de drainage (36), de préférence encore au moins quatre ouvertures de drainage (36), qui relient de manière fluidique un espace intérieur de l'ensemble d'entraînement (1) à l'environnement, de préférence **en ce que** le collier de centrage (34) présente au moins une ouverture de drainage (37) et **en ce que** l'ouverture de drainage (36) de la partie articulée est en contact fluidique avec l'ouverture de drainage (37) du collier de centrage.

12. Ensemble d'entraînement selon l'une des revendications précédentes, **caractérisé en ce que** l'élément de blocage (16) et/ou ledit au moins un ressort d'entraînement (15) de l'agencement (14) de ressort d'entraînement et/ou le composant respectif (5, 6) de l'unité d'entraînement (4) et/ou l'extension axiale (19) est conçu (e) en métal, et/ou **en ce que** la partie d'articulation respective (8, 9) et/ou le tube de boîtier respectif (29, 30) est réalisé(e) en une matière plastique.

13. Ensemble d'entraînement selon l'une des revendications précédentes, **caractérisé en ce que** l'unité d'entraînement (4) est conçue sous la forme d'un ressort à gaz (38), le premier composant (5) étant un cylindre de ressort à gaz (39) rempli de gaz et le deuxième composant (6) étant une tige de piston de ressort à gaz (40) guidée axialement dans celui-ci, ou **en ce que** l'unité d'entraînement (4) est conçue sous la forme d'une unité d'entraînement à broche, le premier composant (5) étant un tube d'écrou de broche avec un écrou de broche fixé axialement et solidaire en rotation par rapport à celui-ci, et le deuxième composant (6) étant une broche filetée venant en prise avec l'écrou de broche.

14. Procédé de montage d'un ensemble d'entraînement selon l'une des revendications précédentes, **caractérisé en ce que** le tube de boîtier intérieur (29) est relié à la partie d'articulation (9) associée, à l'unité d'entraînement (4) et à l'agencement (14) de ressort, de préférence en faisant glisser le tube de boîtier intérieur (29) sur l'un des composants (5, 6) de l'unité d'entraînement (4), notamment la tige (6), et le ressort d'entraînement (15), tout en le centrant par rapport au composant (6) de l'unité d'entraînement (4) par l'intermédiaire du collier de centrage (34).

15. Procédé selon la revendication 14, **caractérisé en ce qu'**ensuite l'élément de blocage (16) est introduit dans l'autre partie d'articulation (8), **en ce qu'**ensuite la partie d'articulation (8) est vissée par l'intermédiaire de l'élément de blocage (16) avec le composant associé (5) de l'unité d'entraînement (4), en particulier l'extension axiale (19), pour former la liaison filetée, de préférence **en ce qu'**ensuite le tube de boîtier extérieur (30) est glissé sur la partie d'articulation (8) et s'enclenche sur celle-ci.
